(19) Europäisches Patentamt
European Patent Office
Office européen des brevets

(11) EP 0 784 431 B1

(12) **EUROPÄISCHE PATENTSCHRIFT**

(45) Veröffentlichungstag und Bekanntmachung des Hinweises auf die Patenterteilung:
**08.03.2000 Patentblatt 2000/10**

(21) Anmeldenummer: **95932779.2**

(22) Anmeldetag: **21.09.1995**

(51) Int Cl.⁷: **A01N 43/56**

(86) Internationale Anmeldenummer:
**PCT/EP95/03714**

(87) Internationale Veröffentlichungsnummer:
**WO 96/10333 (11.04.1996 Gazette 1996/16)**

(54) **HERBIZIDE, SYNERGISTISCHE WIRKSTOFFKOMBINATIONEN MIT 1-(2,6-DICHLOR-4-DIFLUORMETHYL-PHENYL)-5-(2-CHLORPROPIONAMIDO)-4-NITROPYRAZOL**

SYNERGISTIC ACTIVE SUBSTANCE HERBICIDE COMBINATIONS WITH 1-(2,6-DICHLORO-4-DIFLUOROMETHYL-PHENYL)-5-(2-CHLOROPROPIONAMIDO)-4-NITROPYRAZOL

ASSOCIATIONS HERBICIDES SYNERGIQUES DE PRINCIPES ACTIFS AVEC DU 1-(2,6-DICHLORO-4-DIFLUOROMETHYL-PHENYL)-5-(2-CHLOROPROPIONAMIDO)-4-NITROPYRAZOL

(84) Benannte Vertragsstaaten:
**BE CH DE DK ES FR GB GR IT LI NL PT**

(30) Priorität: **04.10.1994 DE 4435476**

(43) Veröffentlichungstag der Anmeldung:
**23.07.1997 Patentblatt 1997/30**

(73) Patentinhaber: **BAYER AG**
**51368 Leverkusen (DE)**

(72) Erfinder:
- **DAHMEN, Peter**
  **D-41470 Neuss (DE)**
- **DOLLINGER, Markus**
  **D-51381 Leverkusen (DE)**
- **SCHALLNER, Otto**
  **D-40789 Monheim (DE)**

(56) Entgegenhaltungen:
**EP-A- 0 139 182**
**EP-A- 0 303 153**
**EP-A- 0 445 420**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft neue herbizide, synergistische Wirkstoffkombinationen, die aus 1-(2,6-Dichlor-4-difluormethyl-phenyl)-5-(2-chlorpropionamido)-4-nitropyrazol einerseits und weiteren bekannten, zu anderen Stoffklassen gehörenden Herbiziden andererseits bestehen und mit besonders gutem Erfolg zur selektiven Unkrautbekämpfung in verschiedenen Nutzpflanzenkulturen verwendet werden können.

Die Verbindung 1-(2,6-Dichlor-4-difluormethyl-phenyl)-5-(2-chlorpropionamido)-4-nitropyrazol gehört zur Gruppe der Phenylpyrazole, deren herbizide Wirkung in den Anmeldungen DE 34 02 308 und DE 37 26 919 beschrieben wurde. Die meisten dieser Phenylpyrazole weisen jedoch eine Reihe von Wirkungslücken, insbesondere gegenüber monokotylen Unkräutern auf.

Überraschenderweise wurde nun gefunden, daß 1-(2,6-Dichlor-4-difluormethyl-phenyl)-5-(2-chlorpropionamido)-4-nitropyrazol bei gemeinsamer Anwendung mit bekannten herbiziden Wirkstoffen beispielsweise aus den Stoffklassen der Alkylaniline, Carbonsäuren, Carbonsäureamide, Diazin(on)e oder Triazin(on)e, Harnstoffe, Nitrile, Thiocarbamate und Triazolinone ausgesprochen synergistische Effekte hinsichtlich der Wirkung gegen Unkräuter zeigten und besonders vorteilhaft als breit wirksames Kombinationspräparat zur selektiven Bekämpfung sowohl von monokotylen, als auch von dikotylen Unkräutern, im Vorauflauf- und im Nachauflauf-Verfahren, in monokotylen Nutzpflanzenkulturen, wie z.B. Mais, verwendet werden kann.

Gegenstand der Erfindung sind herbizide Mittel, gekennzeichnet durch einen synergistisch wirksamen Gehalt an einer Wirkstoffkombination umfassend

(1) 1-(2,6-Dichlor-4-difluormethyl-phenyl)-5-(2-chlorpropionamido)-4-nitropyrazol
und

(2) einen Wirkstoff aus der Gruppe von Herbiziden, welche die nachfolgend genannten Verbindungsklassen (a) bis (i) enthält:

(a) Carbamoyltriazolinone der Formel (I),

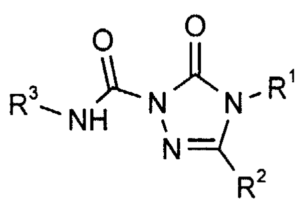

(I)

in welcher

$R^1$ für Wasserstoff, Hydroxy, Amino, für jeweils gegebenenfalls durch Halogen oder Cyano substituiertes Alkyl, Alkenyl, Alkinyl, Alkoxy, Alkenyloxy, Alkinyloxy, Alkylamino, Alkenylamino, Alkinylamino, Alkylidenamino oder Dialkylamino mit jeweils bis zu 6 Kohlenstoffatomen, für jeweils gegebenenfalls durch Halogen, Cyano oder $C_1$-$C_4$-Alkyl substituiertes Cycloalkyl, Cycloalkylalkyl mit jeweils 3 bis 6 Kohlenstoffatomen in den Cycloalkylgruppen und gegebenenfalls 1 bis 4 Kohlenstoffatomen in der Alkylgruppe, oder für jeweils gegebenenfalls durch Halogen, Cyano, $C_1$-$C_4$-Alkyl oder $C_1$-$C_4$-Alkoxy substituiertes Phenyl oder Phenyl-$C_1$-$C_4$-alkyl steht,

$R^2$ für jeweils gegebenenfalls durch Halogen, Cyano, $C_1$-$C_4$-Alkoxy oder $C_1$-$C_4$-Alkylthio substituiertes Alkyl, Alkenyl, Alkinyl, Alkoxy, Alkenyloxy, Alkinyloxy, Alkylthio, Alkenylthio, Alkinylthio, Alkylamino, Alkenylamino, Alkinylamino oder Dialkylamino mit jeweils bis zu 6 Kohlenstoffatomen, für jeweils gegebenenfalls durch Halogen, Cyano oder $C_1$-$C_4$-Alkyl substituiertes Cycloalkyl, Cycloalkyloxy oder Cycloalkylalkyl mit jeweils 3 bis 6 Kohlenstoffatomen in den Cycloalkylgruppen und gegebenenfalls 1 bis 4 Kohlenstoffatomen in der Alkylgruppe, oder für jeweils gegebenenfalls durch Halogen, Cyano, $C_1$-$C_4$-Alkyl oder $C_1$-$C_4$-Alkoxy substituiertes Phenyl, Phenoxy, Phenylthio, Phenylamino oder Phenyl-$C_1$-$C_4$-alkyl steht, und

$R^3$ für jeweils gegebenenfalls durch Halogen, Cyano, $C_1$-$C_4$-Alkoxy, $C_1$-$C_4$-Alkylthio, $C_1$-$C_4$-Alkylsulfinyl, $C_1$-$C_4$-Alkylsulfonyl, $C_1$-$C_4$-Alkylamino oder Di-($C_1$-$C_4$-alkyl)-amino substituiertes Alkyl, Alkenyl, Alkinyl mit jeweils bis zu 10 Kohlenstoffatomen, für jeweils gegebenenfalls durch Halogen, Cyano oder $C_1$-$C_4$-Alkyl

substituiertes Cycloalkyl oder Cycloalkylalkyl mit jeweils 3 bis 6 Kohlenstoffatomen im Cycloalkylteil und gegebenenfalls 1 bis 4 Kohlenstoffatomen im Alkylteil, für jeweils gegebenenfalls durch Halogen, Cyano, $C_1$-$C_4$-Alkyl oder $C_1$-$C_4$-Alkoxy substituiertes Phenyl-$C_1$-$C_6$-alkyl, Phenyl-$C_2$-$C_6$-alkenyl oder Phenyl-$C_2$-$C_6$-alkinyl steht;

(b) Alkylaniline, nämlich N-(1-Ethyl-propyl)-3,4-dimethyl-2,6-dinitroanilin (Pendimethalin) oder N,N-Dipropyl-2,6-dinitro-4-trifluormethylanilin (Trifluralin);

(c) Carbonsäuren und deren Ester, nämlich 3,6-Dichlor-pyridin-2-carbonsäure (Clopyralid), 2,4-Dichlor-phenoxyessigsäure (2,4-D), 3,6-Dichlor-2-methoxy-benzoesäure (Dicamba), 4-Amino-3,5-dichlor-6-fluorpyridin-2-yl-oxy-essigsäure (Fluroxypyr), 2-Amino-4-(hydroxymethylphosphinyl)-butansäure-Ammoniumsalz (Glufosinate-Ammonium), N-Phosphonomethyl-glycin (Glyphosate), 2-(4,5-Dihydro-4-methyl-4-i-propyl-5-oxo-1H-imidazol-2-yl)-5-ethyl-pyridin-3-carbonsäure (Imazethapyr) oder 2-(4,5-Dihydro-4-methyl-4-i-propyl-5-oxo-1H-imidazol-2-yl)-chinolin-3-carbonsäure (Imazaquin);

(d) Carbonsäureamide und Carbonsäureimide, nämlich N-(2-Methoxy-1-methyl-ethyl)-N-(2-ethyl-6-methyl-phenyl)-2-chlor-acetamid (Metolachlor), N-Ethoxymethyl-N-(2-ethyl-6-methyl-phenyl)-2-chlor-acetamid (Acetochlor), N-Methoxymethyl-N-(2,6-dimethyl-phenyl)-2-chlor-acetamid (Alachlor), N-(2-Methoxy-1-methyl-ethyl)-N-(2,4-dimethyl-3-thienyl)-2-chlor-acetamid (Dimethenamid), N-(1H-Pyrazol-1-yl-methyl)-N-(2,6-dimethyl-phenyl)-2-chlor-acetamid (Metazachlor), N-i-Propyl-N-phenyl-2-chlor-acetamid (Propachlor), 2-[4-chlor-2-fluor-5-[(1-methyl-2-propyl)oxy]phenyl]-4,5,6,7-tetrahydro-1H-isoindol-1,3-(2H)-dion (Flumipropyn) oder 1-[4-Chlor-3-[2,2,3,3,3-pentafluorpropoxy)methyl]phenyl]-5-phenyl-1H-1,2,4-triazol-3-carboxamid (Flupoxam);

(e) Diazin(on)e, oder Triazin(on)e, nämlich 2-Chlor-4-ethylamino-6-i-propylamino-1,3,5-triazin (Atrazin), 3-i-Propyl-1H-2,1,3-benzothiadiazin-4(3H)-on-2,2-dioxid (Bentazon), 2-Chlor-4-ethylamino-6-(1-cyano-1-methyl-ethylamino)-1,3,5-triazin (Cyanazin), 4-Amino-6-t-butyl-4,5-dihydro-3-methylthio-1,2,4-triazin-5-on (Metribuzin), O-(6-Chlor-3-phenyl-4-pyridazinyl)-S-octyl-thiocarbonat (Pyridate); 2-Chlor-4,6-bis-ethylamino-1,3,5-triazin (Simazin) oder 2-Chlor-4-ethylamino-6-t-butylamino-1,3,5-triazin (Terbuthylazine);

(f) Harnstoffe und Sulfonylharnstoffe, nämlich N-(4,6-Dimethoxy-pyrimidin-2-yl)-N'-(3-chlor-4-methoxycarbonyl-1-methyl-pyrazol-5-yl-sulfonyl)-harnstoff (Clopyrasulfuron), N-Methoxy-N-methyl-N'-[4-(3,4-dihydro-2-methoxy-2,4,4-trimethyl-2H-1-benzopyran7-yl-oxy)-phenyl]-harnstoff (Metobenzuron), N-(4,6-Dimethoxy-pyrimidin-2-yl)-N'-(3-dimethylaminocarbonyl-pyridin-2-yl-sulfonyl)-harnstoff (Nicosulfuron), N-(4,6-Bis-difluormethoxy-pyrimidin-2-yl)-N'-(2-methoxycarbonylphenylsulfonyl)-harnstoff (Primisulfuron-methyl), N-(4-Methoxy-6-methyl-1,3,5-triazin-2-yl)-N'-[2-(3,3,3-trifluor-propyl)-phenylsulfonyl]-harnstoff (Prosulfuron), N-(4,6-Dimethoxy-pyrimidin-2-yl)-N'-(3-ethylsulfonyl-pyridin-2-yl-sulfonyl)-harnstoff (Rimsulfuron), N-(4-Methoxy-6-methyl-1,3,5-triazin-2-yl)-N'-(2-methoxycarbonyl-3-thienyl-sulfonyl)-harnstoff (Thifensulfuronmethyl) oder 2-(2-Chlorethoxy)-N-[[(4-methoxy-6-methyl-1,3,5-triazin-2-yl)amino]carbonyl]benzolsulfonamdi (Triasulfuron); N'-(4-Brom-phenyl)-N-methoxy-N-methyl-harnstoff (Metobromuron), N-Butyl-N'-(3,4-dichlorphenyl)-N-methyl-harnstoff (Neburon), N'-(3,4'-Dichlor-phenyl)-N-methoxy-N-methyl-harnstoff (Linuron), N'-(3-Chlor-4-methoxy-phenyl)-N,N-dimethyl-harnstoff (Metoxuron);

(g) Nitrile, nämlich 3,5-Dibrom-4-hydroxy-benzonitril (Bromoxynil) oder 3,5-Diiod-4-hydroxy-benzonitril (Ioxynil);

(h) Thiocarbamate, nämlich N-Di-i-butyl-S-ethyl-thiocarbamat (Butylate) oder N-Dipropyl-S-ethyl-thiocarbamat (EPTC);

(i) Wirkstoffe aus diversen Stoffgruppen, nämlich N-2,6-Difluor-phenyl-5-methyl-[1,2,4]-triazolo-[1,5-a]-pyrimidin-2-sulfonamid (Flumetsulam), 1,1'-Dimethyl-4,4'-bipyridinium-chlorid (Paraquat) oder 2-(2-Chlor-4-methylsulfonyl-benzoyl)-1,3-cyclohexandion (Sulcotrione),

wobei auf 1 Gewichtsteil 1-(2,6-Dichlor-4-difluormethyl-phenyl)-5-(2-chlorpropionamido)-4-nitropyrazol vorzugsweise jeweils 0,01 bis 100 Gewichtsteile Wirkstoff der Gruppe von Herbiziden (a) bis (i) entfallen.

Von ganz besonderem Interesse sind erfindungsgemäße herbizide Mittel mit

(1) 1-(2,6-Dichlor-4-difluormethyl-phenyl)-5-(2-chlorpropionamido)-4-nitropyrazol

und

(2) einem Wirkstoff aus der Gruppe von Herbiziden, welche die nachfolgend genannten Verbindungsklassen (a) enthält:

(a) Carbamoyltriazolinone der Formel (I), in welcher

$R^1$ für Wasserstoff, Hydroxy, Amino, für jeweils gegebenenfalls durch Fluor, Chlor oder Cyano substituiertes Methyl, Ethyl, n- oder i-Propyl, n-, i-, s- oder t-Butyl, Propenyl, Butenyl, Propinyl oder Butinyl, Methoxy, Ethoxy, n- oder i-Propoxy, n-, i-, s- oder t-Butoxy, Propenyloxy, Butenyloxy, Propinyloxy oder Butinyloxy, Methylamino, Ethylamino, n- oder i-Propylamino, n-, i-, s- oder t-Butylamino, Propenylamino, Butenylamino, Propinylamino oder Butinylamino, Ethylidenamino, Propylidenamino, Butylidenamino, Dimethylamino oder Diethylamino, für jeweils gegebenenfalls durch Fluor, Chlor, Brom, Cyano, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl oder Cyclohexylmethyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Phenyl oder Benzyl steht,

$R^2$ für jeweils gegebenenfalls durch Fluor, Chlor, Cyano, Methoxy, Ethoxy, n- oder i-Propoxy. Methylthio, Ethylthio, n- oder i-Propylthio substituiertes Methyl, Ethyl, n- oder i-Propyl, n-, i-, s- oder t-Butyl, Propenyl, Butenyl, Propinyl, Butinyl, Methoxy, Ethoxy, n- oder i-Propoxy, n-, i-, s- oder t-Butoxy, Propenyloxy, Butenyloxy, Propinyloxy, Butinyloxy, Methylthio, Ethylthio, n- oder i-Propylthio, n-, i-, s- oder t-Butylthio, Propenylthio, Butenylthio, Propinylthio, Butinylthio, Methylamino, Ethylamino, n- oder i-Propylamino, n-, i-, s- oder t-Butylamino, Propenylamino, Butenylamino, Propinylamino, Butinylamino, Dimethylamino oder Diethylamino, für jeweils gegebenenfalls durch Fluor, Chlor, Brom, Cyano, Methyl, Ethyl, n- oder i-Propyl substituiertes Cyclopropyl, Cyclobutyl, Cyclobutyl, Cyclopentyl, Cyclohexyl, Cyclopropyloxy, Cyclobutyloxy, Cyclopentyloxy, Cyclohexyloxy, Cyclo-propylmethyl, Cyclobutylmethyl, Cyclopentylmethyl oder Cyclohexylmethyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Phenyl, Phenoxy, Phenylthio, Phenylamino oder Benzyl steht, und

$R^3$ für jeweils gegebenenfalls durch Fluor, Cyano, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylsulfinyl, Ethylsulfinyl, Methylsulfonyl, Ethylsulfonyl, Methylamino, Ethylamino, n- oder i-Propylamino, n-, i-, s- oder t-Butylamino, Dimethylamino, Diethylamino, Dipropylamino oder Dibutylamino substituiertes Methyl, Ethyl, n- oder i-Propyl, n-, i-, s- oder t-Butyl. Propenyl, Butenyl, Pentenyl, Hexenyl, Propinyl, Butinyl, Pentinyl oder Hexinyl, für jeweils gegebenenfalls durch Fluor, Chlor, Brom, Cyano, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl, Cyclohexylmethyl, Cyclohexylethyl oder Cyclohexylpropyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Benzyl, Phenylethyl, Phenylpropyl, Phenylbutyl, Phenylethenyl, Phenylpropenyl, Phenylpropenyl, Phenylbutenyl, Phenylethinyl, Phenylpropinyl oder Phenyl-butinyl steht.

Als Beispiele für die als erfindungsgemäße Mischungspartner zu verwendenden Verbindungen der Formel (I) seien im einzelnen genannt:
4-Amino-5-methyl-2-(1,1-dimethyl-ethyl-aminocarbonyl)-2,4-dihydro-3H-1,2,4-triazol-3-on, 4-Amino-5-ethyl-2-(1,1-dimethyl-ethyl-aminocarbonyl)-2,4-dihydro-3H-1,2,4-triazol-3-on, 4-Amino-5-n-propyl-2-(l,l-dimethyl-ethyl-aminocarbonyl)-2,4-dihydro-3H-1,2,4-triazol-3-on, 4-Amino-5-i-propyl-2-(1,1-dimethyl-ethyl-aminocarbonyl)-2,4-dihydro-3H-1,2,4-triazol-3-on, 4-Amino-5-methoxy-2-(1,1-dimethyl-ethylaminocarbonyl)-2,4-dihydro-3H-1,2,4-triazol-3-on, 4-Amino-5-ethoxy-2-(1,1-dimethyl-ethyl-aminocarbonyl)-2,4-dihydro-3H-1,2,4-triazol-3-on, 4-Amino-5-methyl-2-(2-fluor-1,1-dimethyl-ethyl-aminocarbonyl)-2,4-dihydro-3H-1,2,4-triazol-3-on, 4-Amino-5-ethyl-2-(2-fluor-1,1-dimethyl-ethyl-aminocarbonyl)-2,4-dihydro-3 H-1,2,4-triazol-3-on, 4-Amino-5-n-propyl-2-(2-fluor-1,1-dimethyl-ethyl-aminocarbonyl)-2,4-dihydro-3H-1,2,4-triazol-3-on, 4-Amino-5-i-propyl-2-(2-fluor-1,1-dimethyl-ethyl-aminocarbonyl)-2,4-dihydro-3H-1,2,4-triazol-3-on, 4-Amino-5-methoxy-2-(2-fluor-1,1-dimethyl-ethyl-aminocarbonyl)-2,4-dihydro-3H-1,2,4-triazol-3-on, 4-Amino-5-ethoxy-2-(2-fluor-1,1-dimethyl-ethyl-aminocarbonyl)-2,4-dihydro-3H-1,2,4-triazol-3-on, 4-Amino-5-methyl-2-(2-chlor-1,1-dimethyl-ethyl-aminocarbonyl)-2,4-dihydro-3H-1,2,4-triazöl-3-on, 4-Amino-5-ethyl-2-(2-chlor-1,1-dimethyl-ethyl-aminocarbonyl)-2,4-dihydro-3H-1,2,4-triazol-3-on, 4-Amino-5-n-propyl-2-(2-chlor-1,1-dimethyl-ethylaminocarbonyl)-2,4-dihydro-3H-1,2,4-triazol-3-on, 4-Amino-5-i-propyl-2-(2-chlor-1,1-dimethyl-ethyl-aminocarbonyl)-2,4-dihydro-3H-1,2,4-triazol-3-on, 4-Amino-5-methoxy-2-(2-chlor-1,1-dimethyl-ethyl-aminocarbonyl)-2,4-dihydro-3H-1,2,4-triazol-3-on, 4-Amino-5-ethoxy-2-(2-chlor-1,1-dimethyl-ethyl-aminocarbonyl)-2,4-dihydro-3H-1,2,4-triazol-3-on, 4-Amino-5-i-propyl-2-i-propyl-aminocarbonyl-2,4-dihydro-3H-1,2,4-triazol-3-on, 4-Amino-5-dimethylamino-2-(1,1-dimethyl-ethyl-aminocarbonyl)-2,4-dihydro-3H-1,2,4-triazol-3-on, 4-Amino-5-dimethylamino-2-(2-fluor-1,1-dimethylethyl-aminocarbonyl)-2,4-dihydro-3H-1,2,4-triazol-3-on, 4-Amino-5-dimethylamino-2-(2-chlor-1,1-dimethyl-ethyl-aminocarbonyl)-2,4-dihydro-3H-1,2,4-triazol-3-on und 4-Methyl-5-methoxy-2-(1,1-dimethyl-ethyl-aminocarbonyl)-2,4-dihydro-3H-1,2,4-triazol-3-on.

Die Verbindungen der Formel (I) sind bekannt und/oder können nach bekannten Verfahren hergestellt werden (vgl. EP-A 294666, EP-A 370293, EP-A 391187, EP-A 398096, EP-A 399294, EP-A 415196, EP-A 477646).

Es wurde nun überraschend gefunden, daß die oben definierten Wirkstoffkombinationen aus 1-(2,6-Dichlor-4-difluormethyl-phenyl)-5-(2-chlorpropionamido)-4-nitropyrazol und den obengenannten Herbiziden der Gruppen (a) bis (i) eine besonders hohe herbizide Wirksamkeit aufweisen und in verschiedenen Kulturen, wie in Mais, Zuckerrohr, Soja, Sonnenblumen, aber insbesondere in Weizen und Gerste zur selektiven Unkrautbekämpfung verwendet werden können.

Überraschenderweise ist die herbizide Wirksamkeit der erfindungsgemäßen Wirkstoffkombinationen erheblich höher, als die Summe der Wirkungen der einzelnen Wirkstoffe.

Es liegt somit ein nicht vorhersehbarer echter synergistischer Effekt vor und nicht nur eine Wirkungsergänzung. Die neuen Wirkstoffkombinationen sind in einer Reihe von Kulturen, wie z.B. in Gerste und Weizen, gut verträglich, wobei die neuen Wirkstoffkombinationen auch sonst schwer bekämpfbare Unkräuter erfassen. Die neuen Wirkstoffkombinationen stellen somit eine wertvolle Bereicherung der Selektivherbizide, insbesondere der in Gerste und Weizen verwendbaren Herbizide dar.

Als Unkräuter die durch die erfindungsgemäßen Wirkstoffkombinationen gut bekämpft werden können seien beispielsweise genannt:

Dikotyle Unkräuter der Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Solanum, Cirsium, Carduus, Sonchus, Rorippa, Rotala, Lindernia, Lamium, Veronica, Abutilon, Emex, Sida, Datura, Viola, Galeopsis, Papaver, Centaurea, Trifolium, Ranunculus, Taraxum.

Monokotyle Unkräuter der Gattungen Echinochloa, Setaria, Panicum, Digitaria, Phleum, Poa, Festuca, Eleusine, Brachiaria, Lolium, Bromus, Avena, Cyperus, Sorhum, Agropyron, Cynodon, Monochoria, Fimbristylis, Sagittaria, Eleocharis, Scirpus, Papalum, Ischaemum, Sphenoclea, Dactylocenium, Agrostis, Alopecurus, Apera.

Die Verwendung der erfindunsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen weisen, wie bereits angegeben, bei guter Verträglichkeit gegenüber Maiskulturen eine hervorragende Wirkung gegen Unkräuter und Ungräser auf. Ihre Verwendungsmöglichkeit als selektive Herbizide in Mais sei daher besonders hervorgehoben.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Gruppe 1 0,001 bis 1000 Gewichtsteile, vorzugsweise 0,01 bis 100 Gewichtsteile, besonders bevorzugt 0,01 bis 50 Gewichtsteile Wirkstoff der Gruppe 2.

Die Wirkstoffe können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z. B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl,

Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummi arabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt , d.h. in Form von Tankmischungen zu Anwendung gebracht werden.

Die neuen Wirkstoffkombinationen können als solche oder in ihren Formulierungen weiterhin auch in Mischung mit weiteren bekannten Maisherbiziden zur Unkrautbekämpfung Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstruktur-verbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das handelsübliche "Oleo Dupont 11 E") oder Ammoniumsalze, wie z.B. Ammoniumsulfat oder Ammoniumrhodanid aufzunehmen.

Die erfindungsgemäßen Wirkstoffkombinationen können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen oder Streuen.

Die erfindungsgemäßen Wirkstoffkombinationen können sowohl vor, als auch nach dem Auflaufen der Pflanzen appliziert werden. Sie können auch vor der Saat in den Boden eingearbeitet werden.

Als geeignete Mischpartner für den konventionellen Anbau seien vor allem folgende bekannte Wirkstoffe - es werden jeweils "common names" oder ersatzweise bekannte Code-Bezeichnungen angegeben - hervorgehoben, die jeweils einzeln oder gegebenenfalls miteinander kombiniert eingesetzt werden können:

Benzoylprop-ethyl, Flamprop-isopropyl-L, Flamprop-methyl, Dicamba, Bentazon, Benazolin, Thidiazimin, Tralkoxydim, Flumipropyn, Dinitramine, Pendimethalin, Trifluralin, Bifenox, Ethoxyfen, Fluoroglycofen-ethyl, Flurenol, Flurtamone, Imazamethabenz-methyl, Isoxaben, Bromoxynil, Ioxynil, Bromofenoxim, Dichlofopmethyl, Fenoxaprop-ethyl, Clodinofop-propargyl, Isoxapyrifop, Propaquizafop, Glufosinate-ammonium, Sulfosate, Glyphosate, Ethyl [2-Chlor-5-[4-chlor-5-(difluormethoxy)-1-methyl-1H-pyrazol-3-yl]-4-fluorphenoxy]-acetat, Difenzoquat, Pyridate, Clopyralid, Fluroxypyr, Diflufenican, Quinmerac, Amidosulfuron, N-[[[2-(Cyclopropylcarbonyl)phenyl]amino]sulfonyl]-N'-(4,6-dimethoxy-2-pyrimidinyl)-harnstoff, Chlorsulfuron, Metsulfuron-methyl, Thifensulfuron-methyl, Triasulfuron, Tribenuronmethyl, Orbencarb, Prosulfocarb, Triallate, Cyanazine, Terbutryn, Flupoxam, Ethyl-α,2-dichlor-5-[4-(difluormethyl)-4,5-dihydro-3-methyl-5-oxo-1H-1,2,4-triazol-1-yl]-4-fluor-benzolpropanoat, Sulfentrazone, Metosulam, Flumetsulam, Flupropacil, Chlortoluron, Isoproturon, Linuron, Metoxuron, Neburon.

Als geeignete Mischpartner für den bodenschonenden Anbau seien vor allem folgende bekannte Wirkstoffe hervorgehoben:

Bentazon, Bromoxynil, Dicamba, 2,4-D, Glyphosate, Metribuzin, Paraquat, Glufosinate.

Die Aufwandmengen der erfindungsgemäßen Wirkstoffkombinationen können in einem größeren Bereich variiert werden. Sie hängen im wesentlichen von der Art des gewünschten Effektes ab. Im allgemeinen liegen die Aufwandmengen zwischen 10 g und 10 kg Wirkstoffkombination pro Hektar Bodenfläche, vorzugsweise zwischen 50 g und 5 kg pro ha, insbesondere zwischen 100 g und 2 kg pro ha.

Während die einzelnen Wirkstoffe in der herbiziden Wirkung Schwächen aufweisen, zeigen die erfindungsgemäßen Kombinationen durchweg sehr gute und breit wirksame Kontrolle der vorwiegend in Mais auftretenden Unkräuter, die über eine reine Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. Colby, S.R.; "Calculating synergistic and antagonistic responses of herbicide combinations", Weeds 15, Seiten 20-22, 1967):

Wenn

X=% Schädigung durch Herbizid A (Wirkstoff der Gruppe 1) bei p kg/ha Aufwandmenge und

Y=% Schädigung durch Herbizid B (Wirkstoff der Gruppe 2) bei q kg/ha Aufwandmenge und

E = die erwartete Schädigung durch die Herbizide A und B bei p und q kg/ha Aufwandmenge,

dann ist

$$E = X + Y - (X*Y/100).$$

Ist die tatsächliche Schädigung größer als berechnet, so ist die Kombination in ihrer Wirkung überadditiv, d. h. sie zeigt einen synergistischen Effekt.

Aus den Anwendungstests für die erfindungsgemäßen Wirkstoffkombinationen geht hervor, daß die herbizide Wirkung der erfindungsgemäßen Wirkstoffkombinationen größer ist als die berechnete, d.h. daß die neuen Wirkstoffkombinationen synergistisch wirken.

## Patentansprüche

**1.** Herbizide Mittel, gekennzeichnet durch einen synergistisch wirksamen Gehalt an einer Wirkstoffkombination umfassend

(1) 1-(2,6-Dichlor-4-difluormethyl-phenyl)-5-(2-chlorpropionamido)-4-nitropyrazol
und

(2) einen Wirkstoff aus der Gruppe von Herbiziden, welche die nachfolgend genannten Verbindungsklassen (a) bis (i) enthält:

(a) Carbamoyltriazolinone der Formel (I),

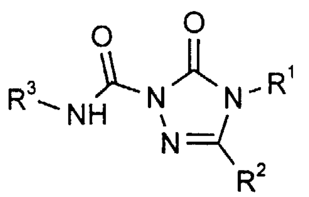

(I)

in welcher

$R^1$ für Wasserstoff, Hydroxy, Amino, für jeweils gegebenenfalls durch Halogen oder Cyano substituiertes Alkyl, Alkenyl, Alkinyl, Alkoxy, Alkenyloxy, Alkinyloxy, Alkylamino, Alkenylamino, Alkinylamino, Alkylidenamino oder Dialkylamino mit jeweils bis zu 6 Kohlenstoffatomen, für jeweils gegebenenfalls durch Halogen, Cyano oder $C_1$-$C_4$-Alkyl substituiertes Cycloalkyl, Cycloalkylalkyl mit jeweils 3 bis 6 Kohlenstoffatomen in den Cycloalkylgruppen und gegebenenfalls 1 bis 4 Kohlenstoffatomen in der Alkylgruppe, oder für jeweils gegebenenfalls durch Halogen, Cyano, $C_1$-$C_4$-Alkyl oder $C_1$-$C_4$-Alkoxy substituiertes Phenyl oder Phenyl-$C_1$-$C_4$-alkyl steht,

$R^2$ für jeweils gegebenenfalls durch Halogen, Cyano, $C_1$-$C_4$-Alkoxy oder $C_1$-$C_4$-Alkylthio substituiertes Alkyl, Alkenyl, Alkinyl, Alkoxy, Alkenyloxy, Alkinyloxy, Alkylthio, Alkenylthio, Alkinylthio, Alkylamino, Alkenylamino, Alkinylamino oder Dialkylamino mit jeweils bis zu 6 Kohlenstoffatomen, für jeweils gegebenenfalls durch Halogen, Cyano oder $C_1$-$C_4$-Alkyl substituiertes Cycloalkyl, Cycloalkyloxy oder Cycloalkylalkyl mit jeweils 3 bis 6 Kohlenstoffatomen in den Cycloalkylgruppen und gegebenenfalls 1 bis 4 Kohlenstoffatomen in der Alkylgruppe, oder für jeweils gegebenenfalls durch Halogen, Cyano,

$C_1$-$C_4$-Alkyl oder $C_1$-$C_4$-Alkoxy substituiertes Phenyl, Phenoxy, Phenylthio, Phenylamino oder Phenyl-$C_1$-$C_4$-alkyl steht, und

$R^3$ für jeweils gegebenenfalls durch Halogen, Cyano, $C_1$-$C_4$-Alkoxy, $C_1$-$C_4$-Alkylthio, $C_1$-$C_4$-Alkylsulfinyl, $C_1$-$C_4$-Alkylsulfonyl, $C_1$-$C_4$-Alkylamino oder Di-($C_1$-$C_4$-alkyl)-amino substituiertes Alkyl, Alkenyl, Alkinyl mit jeweils bis zu 10 Kohlenstoffatomen, für jeweils gegebenenfalls durch Halogen, Cyano oder $C_1$-$C_4$-Alkyl substituiertes Cycloalkyl oder Cycloalkylalkyl mit jeweils 3 bis 6 Kohlenstoffatomen im Cycloalkylteil und gegebenenfalls 1 bis 4 Kohlenstoffatomen im Alkylteil, für jeweils gegebenenfalls durch Halogen, Cyano, $C_1$-$C_4$-Alkyl oder $C_1$-$C_4$-Alkoxy substituiertes Phenyl-$C_1$-$C_6$-alkyl, Phenyl-$C_2$-$C_6$-alkenyl oder Phenyl-$C_2$-$C_6$-alkinyl steht;

(b) Alkylaniline, nämlich N-(1-Ethyl-propyl)-3,4-dimethyl-2,6-dinitro-anilin (Pendimethalin) oder N,N-Dipropyl-2,6-dinitro-4-trifluormethyl-anilin (Trifluralin);

(c) Carbonsäuren und deren Ester, nämlich 3,6-Dichlor-pyridin-2-carbonsäure (Clopyralid), 2,4-Dichlorphenoxyessigsäure (2,4-D), 3,6-Dichlor-2-methoxy-benzoesäure (Dicamba), 4-Amino-3,5-dichlor-6-fluorpyridin-2-yl-oxy-essigsäure (Fluroxypyr), 2-Amino-4-(hydroxymethylphosphinyl)-butansäure-Ammoniumsalz (Glufosinate-Ammonium), N-Phosphonomethyl-glycin (Glyphosate), 2-(4,5-Dihydro-4-methyl-4-i-propyl-5-oxo-1H-imidazol-2-yl)-5-ethyl-pyridin-3-carbonsäure (Imazethapyr), 2-(4,5-Dihydro-4-methyl-4-i-propyl-5-oxo-1H-imidazol-2-yl)-chinolin-3-carbonsäure (Imazaquin), 2-[4-Chlor-2-fluor-5-[(1-methyl-2-propynyl]phenyl]-4,5,6,7-tetrahydro-1H-isoindol-1,3(2H)-dion (Flumipropyn) oder 1-[4-Chlor-3 [2,2,3,3,3-pentafluorpropoxylmethyl]-5-1H, 1,2,4-triazol-3-carboxamid (Flupoxam);

(d) Carbonsäureamide und Carbonsäureimide, nämlich N-(2-Methoxy-1-methyl-ethyl)-N-(2-ethyl-6-methyl-phenyl)-2-chlor-acetamid (Metolachlor), N-Ethoxymethyl-N-(2-ethyl-6-methyl-phenyl)-2-chlor-acetamid (Acetochlor), N-Methoxymethyl-N-(2,6-dimethyl-phenyl)-2-chlor-acetamid (Alachlor), N-(2-Methoxy-1-methyl-ethyl)-N-(2,4-dimethyl-3-thienyl)-2-chlor-acetamid (Dimethenamid), N-(1H-Pyrazol-1-yl-methyl)-N-(2,6-dimethyl-phenyl)-2-chlor-acetamid (Metazachlor) oder N-i-Propyl-N-phenyl-2-chlor-acetamid (Propachlor);

(e) Diazin(on)e, oder Triazin(on)e, nämlich 2-Chlor-4-ethylamino-6-i-propylamino-1,3,5-triazin (Atrazin), 3-i-Propyl-1H-2,1,3-benzothiadiazin-4(3H)-on-2,2-dioxid (Bentazon), 2-Chlor-4-ethylamino-6-(1-cyano-1-methyl-ethylamino)-1,3,5-triazin (Cyanazin), 4-Amino-6-t-butyl-4,5-dihydro-3-methylthio-1,2,4-triazin-5-on (Metribuzin), O-(6-Chlor-3-phenyl-4-pyridazinyl)-S-octyl-thiocarbonat (Pyridate); 2-Chlor-4,6-bis-ethylamino-1,3,5-triazin (Simazin) oder 2-Chlor-4-ethylamino-6-t-butylamino-1,3,5-triazin (Terbuthylazine);

(f) Harnstoffe, nämlich N-(4,6-Dimethoxy-pyrimidin-2-yl)-N'-(3-chlor-4-methoxycarbonyl-1-methyl-pyrazol-5-yl-sulfonyl)-harnstoff (Clopyrasulfuron), N-Methoxy-N-methyl-N'-[4-(3,4-dihydro-2-methoxy-2,4,4-trimethyl-2H-1-benzopyran7-yl-oxy)-phenyl]-harnstoff (Metobenzuron), N-(4,6-Dimethoxypyrimidin-2-yl)-N'-(3-dimethylaminocarbonyl-pyridin-2-yl-sulfonyl)-harnstoff (Nicosulfuron), N-(4,6-Bis-difluormethoxy-pyrimidin-2-yl)-N'-(2-methoxycarbonyl-phenylsulfonyl)-harnstoff (Primisulfuron-methyl), N-(4-Methoxy-6-methyl-1,3,5-triazin-2-yl)-N'-[2-(3,3,3-trifluor-propyl)-phenylsulfonyl]-harnstoff (Prosulfuron), N-(4,6-Dimethoxypyrimidin-2-yl)-N'-(3-ethylsulfonyl-pyridin-2-yl-sulfonyl)--harnstoff (Rimsulfuron), N-(4-Methoxy-6-methyl-1,3,5-triazin-2-yl)-N'-(2-methoxycarbonyl-3-thienyl-sulfonyl)-harnstoff (Thifensulfuron-methyl) oder 2-(2-Chlorethoxy)-N-[[(4-methoxy-6-methyl-1,3,5-triazin-2-yl)amino]carbonyl]benzolsulfonamid (Triasulfuron); N'-(4-Brom-phenyl)-N-methoxy-N-methyl-harnstoff (Metobromuron), N-Butyl-N'-(3,4-dichlorphenyl)-N-methyl-hamstoff (Neburon), N'-(3,4'-Dichlor-phenyl)-N-methoxy-N-methyl-harnstoff (Linuron), N'-(3-Chlor-4-methoxy-phenyl)-N,N-dimethyl-harnstoff (Metoxuron);

(g) Nitrile, nämlich 3,5-Dibrom-4-hydroxy-benzonitril (Bromoxynil) oder 3,5-Diiod-4-hydroxy-benzonitril (Ioxynil);

(h) Thiocarbamate, nämlich N-Di-i-butyl-S-ethyl-thiocarbamat (Butylate) oder N-Dipropyl-S-ethyl-thiocarbamat (EPTC);

(i) Wirkstoffe aus diversen Stoffgruppen, nämlich N-2,6-Difluorphenyl-5-methyl-[1,2,4]-triazolo-[1,5-a]-pyrimidin-2-sulfonamid (Flumetsulam), l,l'-Dimethyl-4,4'-bipyridinium-chlorid (Paraquat) oder 2-(2-Chlor-4-methylsulfonyl-benzoyl)-1,3-cyclohexandion (Sulcotrione).

**2.** Herbizide Mittel gemäß Anspruch 1, dadurch gekennzeichnet, daß

$R^1$ für Wasserstoff, Hydroxy, Amino, für jeweils gegebenenfalls durch Fluor, Chlor oder Cyano substituiertes Methyl, Ethyl, n- oder i-Propyl, n-, i-, s- oder t-Butyl, Propenyl, Butenyl, Propinyl oder Butinyl, Methoxy, Ethoxy, n- oder i-Propoxy, n-, i-, s- oder t-Butoxy, Propenyloxy, Butenyloxy, Propinyloxy oder Butinyloxy, Methylamino, Ethylamino, n- oder i-Propylamino, n-, i-, s- oder t-Butylamino, Propenylamino, Butenylamino, Propinylamino oder Butinylamino, Ethylidenamino, Propylidenamino, Butylidenamino, Dimethylamino oder Diethylamino, für jeweils gegebenenfalls durch Fluor, Chlor, Brom, Cyano, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl oder Cyclohexylmethyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Phenyl oder Benzyl steht,

$R^2$ für jeweils gegebenenfalls durch Fluor, Chlor, Cyano, Methoxy, Ethoxy, n- oder i-Propoxy, Methylthio, Ethylthio, n- oder i-Propylthio substituiertes Methyl, Ethyl, n- oder i-Propyl, n-, i-, s- oder t-Butyl, Propenyl, Butenyl, Propinyl, Butinyl, Methoxy, Ethoxy, n- oder i-Propoxy, n-, i-, s- oder t-Butoxy, Propenyloxy, Butenyloxy, Propinyloxy, Butinyloxy, Methylthio, Ethylthio, n- oder i-Propylthio, n-, i-, s- oder t-Butylthio, Propenylthio, Butenylthio, Propinylthio, Butinylthio, Methylamino, Ethylamino, n- oder i-Propylamino, n-, i-, s- oder t-Butylamino, Propenylamino, Butenylamino, Propinylamino, Butinylamino, Dimethylamino oder Diethylamino, für jeweils gegebenenfalls durch Fluor, Chlor, Brom, Cyano, Methyl, Ethyl, n- oder i-Propyl substituiertes Cyclopropyl, Cyclobutyl, Cyclobutyl, Cyclopentyl, Cyclohexyl, Cyclopropyloxy, Cyclobutyloxy, Cyclopentyloxy, Cyclohexyloxy, Cyclo-propylmethyl, Cyclobutylmethyl, Cyclopentylmethyl oder Cyclohexylmethyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Phenyl, Phenoxy, Phenylthio, Phenylamino oder Benzyl steht, und

$R^3$ für jeweils gegebenenfalls durch Fluor, Cyano, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylsulfinyl, Ethylsulfinyl, Methylsulfonyl, Ethylsulfonyl, Methylamino, Ethylamino, n- oder i-Propylamino, n-, i-, s- oder t-Butylamino, Dimethylamino, Diethylamino, Dipropylamino oder Dibutylamino substituiertes Methyl, Ethyl, n- oder i-Propyl, n-, i-, s- oder t-Butyl, Propenyl, Butenyl, Pentenyl. Hexenyl, Propinyl, Butinyl, Pentinyl oder Hexinyl, für jeweils gegebenenfalls durch Fluor, Chlor, Brom, Cyano, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl, Cyclohexylmethyl, Cyclohexylethyl oder Cyclohexylpropyl, oder für jeweils gegebenenfalls durch Fluor, Chlor, Brom, Cyano, Methyl, Ethyl, n- oder i-Propyl, n-, i-, s- oder t-Butyl, Methoxy oder Ethoxy substituiertes Benzyl, Phenylethyl, Phenylpropyl, Phenylbutyl, Phenylethenyl, Phenylpropenyl, Phenylpropenyl, Phenylbutenyl, Phenylethinyl, Phenylpropinyl oder Phenyl-butinyl steht.

**3.** Herbizide Mittel gemäß Anspruch 1, dadurch gekennzeichnet, daß in der Wirkstoffkombination das Gewichtsverhältnis von 1-(2,6-Dichlor-4-difluormethyl-phenyl)-5-(2-chlorpropionamido)-4-nitropyrazol zu einem herbiziden Wirkstoff aus der Gruppe von Herbiziden der in Anspruch 1 genannten Verbindungsklassen (a) bis (i) zwischen 1:0,01 und 1:1000 liegt.

**4.** Verfahren zur Bekämpfung von Unkraut, dadurch gekennzeichnet, daß man eine Wirkstoffkombination gemäß einem der Ansprüche 1 bis 3 auf Unkräuter und/oder ihren Lebensraum einwirken läßt.

**5.** Verfahren zur Herstellung von herbiziden Mitteln, dadurch gekennzeichnet, daß man eine Wirkstoffkombination gemäß einem der Ansprüche 1 bis 3 mit Streckmitteln und/oder oberflächenaktiven Mitteln vermischt.

**6.** Verfahren zur Herstellung von herbiziden Mitteln gemäß Anspruch 5, dadurch gekennzeichnet, daß die Formulierungen zwischen 0,1 und 95 Gew.-% Wirkstoff enthalten.

**7.** Herbizide Mittel, gekennzeichnet durch einen synergistisch wirksamen Gehalt an einer Wirkstoffkombination umfassend

(1) 1-(2,6-Dichlor-4-difluormethyl-phenyl)-5-(2-chlorpropionamido)-4-nitropyrazol und

(2) einen oder miteinander kombinierte Wirkstoffe aus der Gruppe Benzoylprop-ethyl, Flamprop-isopropyl-L,

Flamprop-methyl, Dicamba, Bentazon, Benazolin, Thidiazimin, Tralkoxydim, Flumipropyn, Dinitramine, Pendimethalin, Trifluralin, Bifenox, Ethoxyfen, Fluoroglycofen-ethyl, Flurenol, Flurtamone, Imazamethabenz-methyl, Isoxaben, Bromoxynil, Ioxynil, Bromofenoxim, Dichlofop-methyl, Fenoxaprop-ethyl, Clodinofoppropargyl, Isoxapyrifop, Propaquizafop, Glufosinate-ammonium, Sulfosate, Glyphosate, Ethyl[2-Chlor-5-[4-chlor-5-(difluormethoxy)-1-methyl-1H-pyrazol-3-yl]-4-fluorphenoxy]-acetat, Difenzoquat, Pyridate, Clopyralid, Fluroxypyr Diflufenican, Quinmerac, Amidosulfuron, N-[[[2-(Cyclopropylcarbonyl)phenyl]amino]sulfonyl]-N'-(4,6-dimethoxy-2-pyrimidinyl)-harnstoff, Chlorsulfuron, Metsulfuron-methyl, Thifensulfuron-methyl, Triasulfuron, Tribenuron-methyl, Orbencarb, Prosulfocarb, Triallate, Cyanazine, Terbutryn, Flupoxam, Ethyl-α,2-dichlor-5-[4-(difluormethyl)-4,5-dihydro-3-methyl-5-oxo-1H-1,2,4-triazol-1-yl]-4-fluor-benzolpropanoat, Sulfentrazone, Metosulam, Flumetsulam, Flupropacil, Chlortoluron, Isoproturon, Linuron, Metoxuron, Neburon.

## Claims

**1.** Herbicidal compositions, characterized in that they comprise a synergistically effective amount of an active compound combination of

(1) 1-(2,6-dichloro-4-difluoromethyl-phenyl)-5-(2-chloropropionamido)-4-nitropyrazole and

(2) an active compound from the group of herbicides which contains the compound classes (a) to (i) given below:

(a) carbamoyltriazolinones of the formula (I)

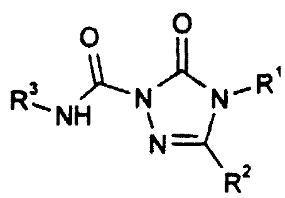

(I)

in which

$R^1$ represents hydrogen, hydroxyl, amino, or represents alkyl, alkenyl, alkinyl, alkoxy, alkenyloxy, alkinyloxy, alkylamino, alkenylamino, alkinylamino, alkylideneamino or dialkylamino, each of which has up to 6 carbon atoms and each of which is optionally substituted by halogen or cyano, or represents cycloalkyl, cycloalkylalkyl, each of which has 3 to 6 carbon atoms in the cycloalkyl groups and, if appropriate, 1 to 4 carbon atoms in the alkyl group and each of which is optionally substituted by halogen, cyano or $C_1$-$C_4$-alkyl, or represents phenyl or phenyl-$C_1$-$C_4$-alkyl, each of which is optionally substituted by halogen, cyano, $C_1$-$C_4$-alkyl or $C_1$-$C_4$-alkoxy,

$R^2$ represents alkyl, alkenyl, alkinyl, alkoxy, alkenyloxy, alkinyloxy, alkylthio, alkenylthio, alkinylthio, alkylamino, alkenylamino, alkinylamino or dialkylamino, each of which has up to 6 carbon atoms and each of which is optionally substituted by halogen, cyano, $C_1$-$C_4$-alkoxy or $C_1$-$C_4$-alkylthio, or represents cycloalkyl, cycloalkyloxy or cycloalkylalkyl, each of which has 3 to 6 carbon atoms in the cycloalkyl groups and, if appropriate, 1 to 4 carbon atoms in the alkyl group and each of which is optionally substituted by halogen, cyano or $C_1$-$C_4$-alkyl, or represents phenyl, phenoxy, phenylthio, phenylamino or phenyl-$C_1$-$C_4$-alkyl, each of which is optionally substituted by halogen, cyano, $C_1$-$C_4$-alkyl or $C_1$-$C_4$-alkoxy, and

$R^3$ represents alkyl, alkenyl, alkinyl, each of which has up to 10 carbon atoms and each of which is optionally substituted by halogen, cyano, $C_1$-$C_4$-alkoxy, $C_1$-$C_4$-alkylthio, $C_1$-$C_4$-alkylsulphinyl, $C_1$-$C_4$-alkylsulphonyl, $C_1$-$C_4$-alkylamino or di-($C_1$-$C_4$-alkyl) -amino, or represents cycloalkyl or cycloalkylalkyl, each of which has 3 to 6 carbon atoms in the cycloalkyl moiety and, if appropriate, 1 to 4 carbon atoms in the alkyl moiety and each of which is optionally substituted by halogen, cyano or $C_1$-$C_4$-

alkyl, or represents phenyl-$C_1$-$C_6$-alkyl, phenyl-$C_2$-$C_6$-alkenyl or phenyl-$C_2$-$C_6$-alkinyl, each of which is optionally substituted by halogen, cyano, $C_1$-$C_4$-alkyl or $C_1$-$C_4$-alkoxy;

(b) alkylanilines, namely N-(1-ethyl-propyl)-3,4-dimethyl-2,6-dinitro-aniline (pendimethalin) or N,N-dipropyl-2,6-dinitro-4-trifluoromethyl-aniline (trifluralin);

(c) carboxylic acids and their esters, namely 3,6-dichloro-pyridine-2-carboxylic acid (clopyralid), 2,4-dichloro-phenoxyacetic acid (2,4-D), 3,6-dichloro-2-methoxybenzoic acid (dicamba), 4-amino-3,5-dichloro-6-fluoro-pyridin-2-yl-oxy-acetic acid (fluroxypyr), ammonium 2-amino-4-(hydroxymethylphosphinyl)-butanoate (glufosinate-ammonium), N-phosphonomethyl-glycine (glyphosate), 2-(4,5-dihydro-4-methyl-4-i-propyl-5-oxo-1H-imidazol-2-yl)-5-ethyl-pyridine-3-carboxylic acid (imazethapyr), 2-(4,5-dihydro-4-methyl-4-i-propyl-5-oxo-1H-imidazol-2-yl)-quinoline-3-carboxylic acid (imazaquin), 2-[4-chloro-2-fluoro-5-[(1-methyl-2-propynyl)oxy]phenyl]-4,5,6,7-tetrahydro-1H-isoindole-1,3(2H)-dione (flumipropyn) or 1-[4-chloro-3-[2,2,3,3,3-pentafluoropropoxylmethyl]-5-1H,1,2,4-triazole-3-carboxamide (flupoxam);

(d) carboxamides and carboximides, namely N-(2-methoxy-1-methyl-ethyl)-N-(2-ethyl-6-methyl-phenyl)-2-chloro-acetamide (metolachlor), N-ethoxymethyl-N-(2-ethyl-6-methyl-phenyl)-2-chloro-acetamide (acetochlor), N-methoxymethyl-N-(2,6-dimethyl-phenyl)-2-chloro-acetamide (alachlor), N-(2-methoxy-1-methyl-ethyl)-N-(2,4-dimethyl-3-thienyl)-2-chloroacetamide (dimethenamid), N-(1H-pyrazol-1-yl-methyl)-N-(2,6-dimethyl-phenyl)-2-chloro-acetamide (metazachlor) or N-i-propyl-N-phenyl-2-chloro-acetamide (propachlor);

(e) diazin(on)es or triazin(on)es, namely 2-chloro-4-ethylamino-6-i-propylamino-1,3,5-triazine (atrazine), 3-i-propyl-1H-2,1,3-benzothiadiazin-4(3H)-one 2,2-dioxide (bentazone), 2-chloro-4-ethylamino-6-(1-cyano-1-methyl-ethylamino)-1,3,5-triazine (cyanazine), 4-amino-6-t-butyl-4,5-dihydro-3-methylthio-1,2,4-triazin-5-one (metribuzin), O-(6-chloro-3-phenyl-4-pyridazinyl) S-octyl thiocarbonate (pyridate); 2-chloro-4,6-bis-ethylamino-1,3,5-triazine (simazine) or 2-chloro-4-ethylamino-6-t-butylamino-1,3,5-triazine (terbuthylazine);

(f) ureas, namely N-(4,6-dimethoxy-pyrimidin-2-yl)-N'-(3-chloro-4-methoxycarbonyl-1-methyl-pyrazol-5-yl-sulphonyl)-urea (clopyrasulfuron), N-methoxy-N-methyl-N'-[4-(3,4-dihydro-2-methoxy-2,4,4-trimethyl-2H-1-benzopyran 7-yl-oxy)-phenyl]-urea (metobenzuron), N- (4,6-dimethoxypyrimidin-2-yl)-N'-(3-dimethylaminocarbonyl-pyridin-2-yl-sulphonyl)-urea (nicosulfuron), N-(4,6-bis-difluoromethoxy-pyrimidin-2-yl)-N'-(2-methoxycarbonyl-phenylsulphonyl)-urea (primisulfuron-methyl), N-(4-methoxy-6-methyl-1,3,5-triazin-2-yl)-N'-[2-(3,3,3-trifluoro-propyl)-phenylsulphonyl]-urea (prosulfuron), N-(4,6-dimethoxypyrimidin-2-yl)-N'-(3-ethylsulphonylpyridin-2-yl-sulphonyl)-urea (rimsulfuron), N-(4-methoxy-6-methyl-1,3,5-triazin-2-yl)-N'-(2-methoxycarbonyl-3-thienyl-sulphonyl)-urea (thifensulfuronmethyl) or 2-(2-chloroethoxy)-N-[[(4-methoxy-6-methyl-1,3,5-triazin-2-yl)amino]carbonyl]benzene sulphonamide (triasulfuron); N'-(4-bromo-phenyl) -N-methoxy-N-methyl-urea (metobromuron), N-butyl-N'-(3,4-dichlorophenyl)-N-methylurea (neburon), N'-(3,4'-dichlorophenyl)-N-methoxy-N-methyl-urea (linuron), N'-(3-chloro-4-methoxyphenyl)-N,N-dimethyl-urea (metoxuron);

(g) nitriles, namely 3,5-dibromo-4-hydroxybenzonitrile (bromoxynil) or 3,5-diiodo-4-hydroxy-benzonitrile (ioxynil);

(h) thiocarbamates, namely S-ethyl N-di-i-butylthiocarbamate (butylate) or S-ethyl N-dipropylthiocarbamate (EPTC);

(i) active compounds from a variety of substance groups, namely N-2,6-difluorophenyl-5-methyl-[1,2,4]-triazolo-[1,5-a]-pyrimidine-2-sulphonamide (flumetsulam), 1,1'-dimethyl-4,4'-bipyridinium chloride (paraquat) or 2-(2-chloro-4-methylsulphonyl-benzoyl)-1,3-cyclohexanedione (sulcotrione).

**2.** Herbicidal compositions according to Claim 1, characterized in that

$R^1$ represents hydrogen, hydroxyl, amino, or represents methyl, ethyl, n- or i-propyl, n-, i-, s- or t-butyl, propenyl, butenyl, propinyl or butinyl, methoxy, ethoxy, nor i-propoxy, n-, i-, s- or t-butoxy, propenyloxy, butenyloxy, propinyloxy or butinyloxy, methylamino, ethylamino, nor i-propylamino, n-, i-, s- or t-butylamino, propenylamino, butenylamino, propinylamino or butinylamino, ethylideneamino, propylideneamino, butylideneamino, dimethylamino or diethylamino, each of which is optionally substituted by fluorine, chlorine or cyano, or represents cyclopropyl, cyclobutyl, cyclopentyl, cyclohexyl, cyclopropylmethyl, cyclobutylmethyl, cyclopentylmethyl or cyclohexylmethyl, each of which is optionally substituted by fluorine, chlorine, bromine, cyano, methyl, ethyl, n- or i-propyl, or represents phenyl or benzyl, each of which is optionally substituted by fluorine, chlorine, bromine, cyano, methyl, ethyl, n- or i-propyl, n-, i-, s- or t-butyl, methoxy or ethoxy,

$R^2$ represents methyl, ethyl, n- or i-propyl, n-, i-, s- or t-butyl, propenyl, butenyl, propinyl, butinyl, methoxy, ethoxy, n- or i-propoxy, n-, i-, s- or t-butoxy, propenyloxy, butenyloxy, propinyloxy, butinyloxy, methylthio, ethylthio, n- or i-propylthio, n-, i-, s- or t-butylthio, propenylthio, butenylthio, propinylthio, butinylthio, methylamino, ethylamino, nor i-propylamino, n-, i-, s- or t-butylamino, propenylamino, butenylamino, propinylamino, butinylamino, dimethylamino or diethylamino, each of which is optionally substituted by fluorine, chlorine, cyano, methoxy, ethoxy, n- or i-propoxy, methylthio, ethylthio, n- or i-propylthio, or represents cyclopropyl, cyclobutyl, cyclobutyl, cyclopentyl, cyclohexyl, cyclopropyloxy, cyclobutyloxy, cyclopentyloxy, cyclohexyloxy, cyclo-propylmethyl, cyclobutylmethyl, cyclopentylmethyl or cyclohexylmethyl, each of which is optionally substituted by fluorine, chlorine, bromine, cyano, methyl, ethyl, n- or i-propyl, or represents phenyl, phenoxy, phenylthio, phenylamino or benzyl, each of which is optionally substituted by fluorine, chlorine, bromine, cyano, methyl, ethyl, n- or i-propyl, n-, i-, s- or t-butyl, methoxy or ethoxy, and

$R^3$ represents methyl, ethyl, n- or i-propyl, n-, i-, s- or t-butyl, propenyl, butenyl, pentenyl, hexenyl, propinyl, butinyl, pentinyl or hexinyl, each of which is optionally substituted by fluorine, cyano, methoxy, ethoxy, n- or i-propoxy, n-, i-, s- or t-butoxy, methylthio, ethylthio, n- or i-propylthio, n-, i-, s- or t-butylthio, methylsulphinyl, ethylsulphinyl, methylsulphonyl, ethylsulphonyl, methylamino, ethylamino, n- or i-propylamino, n-, i-, s- or t-butylamino, dimethylamino, diethylamino, dipropylamino or dibutylamino, or represents cyclopropyl, cyclobutyl, cyclopentyl, cyclohexyl, cyclopropylmethyl, cyclobutylmethyl, cyclopentylmethyl, cyclohexylmethyl, cyclohexylethyl or cyclohexylpropyl, each of which is optionally substituted by fluorine, chlorine, bromine, cyano, methyl, ethyl, n- or i-propyl, or represents benzyl, phenylethyl, phenylpropyl, phenylbutyl, phenylethenyl, phenylpropenyl, phenylpropenyl, phenylbutenyl, phenylethinyl, phenylpropinyl or phenylbutinyl, each of which is optionally substituted by fluorine, chlorine, bromine, cyano, methyl, ethyl, n- or i-propyl, n-, i-, s- or t-butyl, methoxy or ethoxy.

**3.** Herbicidal compositions according to Claim 1, characterized in that, in the active compound combination, the weight ratio of 1-(2,6-dichloro-4-difluoromethyl-phenyl)-5-(2-chloropropionamido)-4-nitropyrazole to a herbicidally active compound from the group of herbicides of the compound classes (a) to (i) mentioned in Claim 1 is between 1:0.01 and 1:1000.

**4.** Method of controlling weeds, characterized in that an active compound combination according to one of Claims 1 to 3 is allowed to act on weeds and/or their environment.

**5.** Process for the preparation of herbicidal compositions, characterized in that an active compound combination according to one of Claims 1 to 3 is mixed with extenders and/or surfactants.

**6.** Process for the preparation of herbicidal compositions according to Claim 5, characterized in that the formulations comprise between 0.1 and 95% by weight of active compound.

**7.** Herbicidal compositions, characterized in that they comprise a synergistically effective amount of an active compound combination of

(1) 1-(2,6-dichloro-4-difluoromethyl-phenyl)-5-(2-chloropropionamido)-4-nitropyrazole and

(2) one or a combination of active compounds from the group consisting of benzoylprop-ethyl, flamprop-isopropyl-L, flamprop-methyl, dicamba, bentazone, benazolin, thidiazimin, tralkoxydim, flumipropyn, dinitramine, pendimethalin, trifluralin, bifenox, ethoxyfen, fluoroglycofen-ethyl, flurenol, flurtamone, imazamethabenz-methyl, isoxaben, bromoxynil, ioxynil, bromofenoxim, dichlofopmethyl, fenoxaprop-ethyl, clodinofoppropargyl, isoxapyrifop, propaquizafop, glufosinate-ammonium, sulfosate, glyphosate, ethyl [2-chloro-5-[4-chloro-5-(difluoromethoxy)-1-methyl-1H-pyrazol-3-yl]-4-fluorophenoxy]-acetate, difenzoquat, pyridate, clopyralid, fluroxypyr, diflufenican, quinmerac, amidosulfuron, N-[[[2-(cyclopropylcarbonyl)phenyl]amino]sulphonyl]-N'-(4, 6-dimethoxy-2-pyrimidinyl)-urea, chlorosulfuron, metsulfuron-methyl, thiefensulfuron-methyl, triasulfuron,

tribenuron-methyl, orbencarb, prosulfocarb, triallate, cyanazine, terbutryn, flupoxam, ethyl-α,2-dichloro-5-[4-(difluoromethyl)-4,5-dihydro-3-methyl-5-oxo-1H-l,2,4-triazol-1-yl]-4-fluoro-benzene propanoate, sulfentrazone, metosulam, flumetsulam, flupropacil, chlortoluron, isoproturon, linuron, metoxuron, neburon.

## Revendications

1. Compositions herbicides, caractérisées par une teneur à effet synergique d'une association de substances actives comprenant

(1) du 1-(2,6-dichloro-4-difluorométhylphényl)-5-(2-chloropropionamido)-4-nitropyrazole
et
(2) une substance active du groupe d'herbicides qui contient les classes de composés (a) à (i) mentionnées ci-après :

(a) des carbamoyltriazolinones de formule (I),

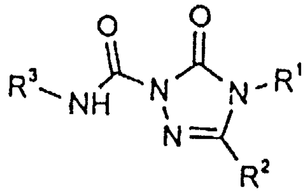

(I)

dans laquelle

$R^1$ représente l'hydrogène, un groupe hydroxy, amino, un groupe alkyle, alcényle, alcynyle, alkoxy, alcényloxy, alcynyloxy, alkylamino, alcénylamino, alcynylamino, alkylidène-amino ou dialkylamino ayant dans chaque cas jusqu'à 6 atomes de carbone et dont chacun est substitué le cas échéant par un radical halogéno ou cyano, un groupe cycloalkyle ou cycloalkylalkyle dont chacun est éventuellement substitué par un radical halogéno, cyano ou alkyle en $C_1$ à $C_4$ avec, dans chaque cas, 3 à 6 atomes de carbone dans les groupes cycloalkyle et, le cas échéant, 1 à 4 atomes de carbone dans le groupe alkyle, ou bien un groupe phényle ou phényl-(alkyle en $C_1$ à $C_4$) dont chacun est substitué le cas échéant par un radical halogéno, cyano, alkyle en $C_1$ à $C_4$ ou alkoxy en $C_1$ à $C_4$,

$R^2$ représente un groupe alkyle, alcényle, alcynyle, alkoxy, alcényloxy, alcynyloxy, alkylthio, alcénylthio, alcynylthio, alkylamino, alcénylamino, alcynylamino ou dialkylamino dont chacun est éventuellement substitué par un radical halogéno, cyano, alkoxy en $C_1$ à $C_4$ ou alkylthio en $C_1$ à $C_4$ et ayant chacun jusqu'à 6 atomes de carbone, un groupe cycloalkyle, cycloalkylalkoxy ou cycloalkylalkyle portant chacun, le cas échéant, un substituant halogéno, cyano ou alkyle en $C_1$ à $C_4$ avec, dans chaque cas, 3 à 6 atomes de carbone dans les groupes cycloalkyle et, le cas échéant, 1 à 4 atomes de carbone dans le groupe alkyle, ou bien un groupe phényle, phénoxy, phénylthio, phénylamino ou phényl-(alkyle en $C_1$ à $C_4$) portant chacun, le cas échéant, un substituant halogéno, cyano, alkyle en $C_1$ à $C_4$ ou alkoxy en $C_1$ à $C_4$, et

$R^3$ représente un groupe alkyle, alcényle ou alcynyle dont chacun est éventuellement substitué par un radical halogéno, cyano, alkoxy en $C_1$ à $C_4$, alkylthio en $C_1$ à $C_4$, alkylsulfinyle en $C_1$ à $C_4$, alkylsulfonyle en $C_1$ à $C_4$, alkylamino en $C_1$ à $C_4$ ou di-(alkyle en $C_1$ à $C_4$)amino et ayant, dans chaque cas, jusqu'à 10 atomes de carbone, un groupe cycloalkyle ou cycloalkylalkyle avec, dans chaque cas, 3 à 6 atomes de carbone dans la partie cycloalkyle et, le cas échéant, 1 à 4 atomes de carbone dans la partie alkyle et portant chacun, le cas échéant, un radical halogéno, cyano ou alkyle en $C_1$ à $C_4$, un groupe phényl-(alkyle en $C_1$ à $C_6$), phényl(alcényle en $C_2$ à $C_6$) ou phényl(alcynyle en $C_2$ à $C_6$) portant chacun, le cas échéant, un substituant halogéno, cyano, alkyle en $C_1$ à $C_4$ ou alkoxy en $C_1$ à $C_4$ ;

(b) des alkylanilines, à savoir la N-(1-éthylpropyl)-3,4-diméthyl-2,6-dinitroaniline (pendiméthalin) ou la N, N-dipropyl-2,6-dinitro-4-trifluorométhylaniline (trifluralin) ;
(c) des acides carboxyliques et leurs esters, à savoir l'acide 3,6-dichloropyridine-2-carboxylique (clopyralid), l'acide 2,4-dichlorophénoxyacétique (2,4-D), l'acide 3,6-dichloro-2-méthoxybenzoïque (dicamba), l'acide 4-amino-3,5-dichloro-6-fluoropyridine-2-yloxy-acétique (fluroxypyr), le sel d'ammonium de l'acide 2-amino-4-(hydroxyméthylphosphinyl)-butanoïque (glufosinateammonium), la N-phosphonométhyl-glycine (glyphosate), l'acide 2-(4,5-dihydro-4-méthyl-4-isopropyl-5-oxo-1H-imidazole-2-yl)-5-éthylpyridine-3-carboxylique (imazéthapyr), l'acide 2-(4,5-dihydro-4-méthyl-4-isopropyl-5-oxo-1H-imidazole-2-yl)-quinoléine-3-carboxylique (imazaquin), la 2-[4-chloro-2-fluoro-5-[(1-méthyl-2-propynyl]phényl]-4,5,6,7-tétrahydro-lH-isoindole-1,3(2H)-dione (flumipropyn) ou le 1-[4-chloro-3-[2,2,3,3,3-pentafluoropropoxylméthyl]-5-1H,1,2,4-triazole-3-carboxamide (flupoxam) ;

(d) des amides d'acides carboxyliques et des imides d'acides carboxyliques, à savoir le N-(2-méthoxy-1-méthyléthyl)-N-(2-éthyl-6-méthylphényl)-2-chloracétamide (métolachlore), le N-éthoxyméthyl-N-(2-éthyl-6-méthylphényl)-2-chloracétamide (Acétochlore), le N-méthoxyméthyl-N-(2,6-diméthylphényl)-2-chloracétamide (alachlore), le N-(2-méthoxy-1-méthyléthyl)-N-(2,4-diméthyl-3-thiényl-2-chloracétamide (diméthénamid), le N-(1H-pyrazole-1-ylméthyl)-N- (2,6-diméthylphényl)-2-chloracétamide (métazachlore) ou le N-isopropyl-N-phényl-2-chloracétamide (propachlore) ;

(e) des diazin(on)es ou des triazin(on)es, à savoir la 2-chloro-4-éthylamino-6-isopropylamino-1,3,5-triazine (atrazine), le 3-isopropyl-1H-2,1,3-benzothiadiazine-4(3H)-one-2,2-dioxyde (bentazone), la 2-chloro-4-éthylamino-6-(1-cyano-1-méthyléthylamino)-1,3,5-triazine (cyanazine), la 4-amino-6-tertio-butyl-4,5-dihydro-3-méthylthio-1,2,4-triazine-5-one (métribuzine), le 0-(6-chloro-3-phényl-4-pyridazinyl)-S-octyl-thiocarbonate (pyridate) ; la 2-chloro-4,6-bis-éthylamino-1,3,5-triazine (simazine) ou la 2-chloro-4-éthylamino-6-tertio-butylamino-1,3,5-triazine (terbuthylazine) ;

(f) des urées, à savoir la N-(4,6-diméthoxypyrimidine-2-yl)-N'-(3-chloro-4-méthoxycarbonyl-1-méthylpyrazole-5-ylsulfonyl)-urée (clopyrasulfuron), la N-méthoxy-N-méthyl-N'-[4-(3,4-dihydro-2-méthoxy-2,4,4-triméthyl-2H-1-benzopyranne-7-yl-oxy)-phényl]-urée (métobenzuron), la N-(4,6-diméthoxypyrimidine-2-yl)-N'-(3-diméthylaminocarbonylpyridine-2-yl-sulfonyl)-urée (nicosulfuron), la N-(4,6-bis-difluorométhoxypyrimidine-2-yl)-N'-(2-méthoxycarbonylphénylsulfonyl)-urée (primisulfuron-méthyl), la N-(4-méthoxy-6-méthyl-1,3,5-triazine-2-yl)-N'-[2-(3,3,3-trifluoropropyl)-phénylsulfonyl]-urée (prosulfuron), la N-(4,6-diméthoxypyrimidine-2-yl) -N'-(3-éthylsulfonylpyridine-2-ylsulfonyl)-urée (rimsulfuron), la N-(4-méthoxy-6-méthyl-1,3,5-triazine-2-yl)-N'-(2-méthoxycarbonyl-3-thiénylsulfonyl)-urée (thifensulfuron-méthyl) ou le 2-(2-chloréthoxy)-N-[[(4-méthoxy-6-méthyl-1,3,5-triazine-2-yl)amino]carbonyl]benzènesulfamide (triasulfuron) ; la N'-(4-bromophényl)-N-méthoxy-N-méthylurée (métobromuron), la N-butyl-N'-(3,4-dichlorophényl)-N-méthyl-urée (néburon), la N'-(3,4'-dichlorophényl)-N-méthoxy-N-méthyl-urée (linuron), la N'-(3-chloro-4-méthoxyphényl)-N,N-diméthylurée (métoxuron) ;

(g) des nitriles, à savoir le 3,5-dibromo-4-hydroxybenzonitrile (bromoxynil) ou le 3,5-diiodo-4-hydroxybenzonitrile (ioxynil) ;

(h) des thiocarbamates, à savoir le N-diisobutyl-S-éthylthiocarbamate (butylate) ou le N-dipropyl-S-éthylthiocarbamate (EPTC) ;

(i) des substances actives appartenant à divers groupes de substances, à savoir le N-2,6-difluorophényl-5-méthyl-[1,2,4]-triazolo-[1,5-a]-pyrimidine-2-sulfonamide (flumetsulam), le chlorure de 1,1'-diméthyl-4,4'-bipyridinium (paraquat) ou la 2-(2-chloro-4-méthylsulfonylbenzoyl)-1,3-cyclohexanedione (sulcotrione).

**2.** Compositions herbicides suivant la revendication 1, caractérisées en ce que

$R^1$ représente l'hydrogène, un groupe hydroxy, amino, un groupe méthyle, éthyle, n-propyle, isopropyle, n-butyle, isobutyle, sec.-butyle, tertio-butyle, propényle, butényle, propynyle ou butynyle portant éventuellement dans chaque cas un substituant fluoro, chloro ou cyano, un groupe méthoxy, éthoxy, n-propoxy, isopropoxy, n-butoxy, isobutoxy, sec.-butoxy, tertio-butoxy, propényloxy, butényloxy, propynyloxy ou butynyloxy, méthylamino, éthylamino, n-propylamino, isopropylamino, n-butylamino, isobutylamino, sec.-butylamino, tertio-butylamino, propénylamino, buténylamino, propynylamino ou butynylamino, éthylidène-amino, propylidène-amino, butylidène-amino, diméthylamino ou diéthylamino, un groupe cyclopropyle, cyclobutyle, cyclopentyle, cyclohexyle, cyclopropylméthyle, cyclobutylméthyle, cyclopentylméthyle ou cyclohexylméthyle dont chacun porte, le cas échéant, un substituant fluoro, chloro, bromo, cyano, méthyle, éthyle, n-propyle ou isopropyle, ou un groupe phényle ou benzyle portant chacun, le cas échéant, un substituant fluoro, chloro, bromo, cyano, méthyle, éthyle, n-propyle, isopropyle, n-butyle, isobutyle, sec.-butyle, tertiobutyle, méthoxy ou éthoxy,

$R^2$ représente un groupe méthyle, éthyle, n-propyle, isopropyle, n-butyle, isobutyle, sec.-butyle, tertiobutyle, propényle, butényle, propynyle, butynyle, méthoxy, éthoxy, n-propoxy, isopropoxy, n-butoxy, isobutoxy, sec.-butoxy, tertio-butoxy, propényloxy, butényloxy, propynyloxy, butynyloxy, méthylthio, éthylthio, n-propylthio, isopropylthio, n-butylthio, isobutylthio, sec.-butylthio, tertio-butylthio, propénylthio, buténylthio, propynylthio, butynylthio, méthylamino, éthylamino, n-propylamino, isopropylamino, n-butylamino, isobutylamino, sec.-butylamino, tertio-butylamino, propénylamino, buténylamino, propynylamino, butynylamino, diméthylamino ou diéthylamino dont chacun porte, le cas échéant, un substituant fluoro, chloro, cyano, méthoxy, éthoxy, n-propoxy, isopropoxy, méthylthio, éthylthio, n-propylthio ou isopropylthio, un groupe cyclopropyle, cyclobutyle, cyclopentyle, cyclohexyle, cyclopropyloxy, cyclobutyloxy, cyclopentyloxy, cyclohexyloxy, cyclopropylméthyle, cyclobutylméthyle, cyclopentylméthyle ou cyclohexylméthyle dont chacun porte, le cas échéant, un substituant fluoro, chloro, bromo, cyano, méthyle, éthyle, n-propyle ou isopropyle, ou bien un groupe phényle, phénoxy, phénylthio, phénylamino ou benzyle dont chacun porte, le cas échéant, un substituant fluoro, chloro, bromo, cyano, méthyle, éthyle, n-propyle, isopropyle, n-butyle, isobutyle, sec.-butyle, tertio-butyle, méthoxy ou éthoxy, et

$R^3$ représente un groupe méthyle, éthyle, n-propyle, isopropyle, n-butyle, isobutyle, sec.-butyle, tertiobutyle, propényle, butényle, pentényle, hexényle, propynyle, butynyle, pentynyle ou hexynyle dont chacun porte, le cas échéant, un substituant fluoro, cyano, méthoxy, éthoxy, n-propoxy, isopropoxy, n-butoxy, isobutoxy, sec.-butoxy, tertio-butoxy, méthylthio, éthylthio, n-propylthio, isopropylthio, n-butylthio, isobutylthio, sec.-butylthio, tertiobutylthio, méthylsulfinyle, éthylsulfinyle, méthylsulfonyle, éthylsulfonyle, méthylamino, éthylamino, n-propylamino, isopropylamino, n-butylamino, isobutylamino, sec.-butylamino, tertio-butylamino, diméthylamino, diéthylamino, dipropylamino ou dibutylamino, un groupe cyclopropyle, cyclobutyle, cyclopentyle, cyclohexyle, cyclopropylméthyle, cyclobutylméthyle, cyclopentylméthyle, cyclohexylméthyle, cyclohexyléthyle ou cyclohexylpropyle dont chacun porte, le cas échéant, un substituant fluoro, chloro, bromo, cyano, méthyle, éthyle, n-propyle ou isopropyle, ou bien un groupe benzyle, phényléthyle, phénylpropyle, phénylbutyle, phényléthényle, phénylpropényle, phénylbutényle, phényléthynyle, phénylpropynyle ou phénylbutynyle portant chacun, le cas échéant, un substituant fluoro, chloro, bromo, cyano, méthyle, éthyle, n-propyle, isopropyle, n-butyle, isobutyle, sec.-butyle, tertio-butyle, méthoxy ou éthoxy.

**3.** Compositions herbicides suivant la revendication 1, caractérisées en ce que dans l'association de substances actives, le rapport en poids du 1-(2,6-dichloro-4-difluorométhylphényl)-5-(2-chloropropionamido)-4-nitropyrazole à une substance herbicide du groupe des herbicides des classes de composés (a) à (i) mentionnées dans la revendication 1 se situe entre 1:0,01 et 1:1000.

**4.** Procédé pour combattre des mauvaises herbes, caractérisé en ce qu'on fait agir une association de substances actives suivant l'une des revendications 1 à 3 sur les mauvaises herbes et/ou sur leur milieu.

**5.** Procédé de préparation de compositions herbicides, caractérisé en ce qu'on mélange une association de substances actives suivant l'une des revendications 1 à 3 avec des diluants et/ou des agents tensio-actifs.

**6.** Procédé de préparation de compositions herbicides suivant la revendication 5, caractérisé en ce que les formulations contiennent entre 0,1 et 95 % en poids de substance active.

**7.** Compositions herbicides, caractérisées par une teneur à effet synergique d'une association de substances actives comprenant :

(1) du 1-(2, 6-dichloro-4-difluorométhylphényl)-5-(2-chloropropionamido)-4-nitropyrazole et
(2) une substance active ou des substances actives associées entre elles, du groupe benzoylpropéthyl, flamprop-isopropyl-L, flamprop-méthyl, dicamba, bentazone, benazoline, thidiazimine, tralkoxydim, flumipropyne, dinitramine, pendiméthaline, trifluraline, bifénox, éthoxyfène, fluoroglycofène-éthyl, flurénol, flurtamone, imazaméthabez-méthyl, isoxabène, bromoxynil, ioxynil, bromofénoxim, dichlofop-méthyl, fenoxaprop-éthyl, clodinofop-propargyl, isoxapyrifop, propaquizafop, glufosinate-ammonium, sulfosate, glyphosate, [2-chloro-5-[4-chloro-5-(difluorométhoxy)-1-méthyl-1H-pyrazole-3-yl] -4-fluorophénoxy]-acétate d'éthyle, difenzoquat, pyridate, clopyralid, fluroxypyr, diflufénican, quinmérac, amidosulfuron, N-[[[2-(cyclopropylcarbonyl)phényl]amino]sulfonyl]-N'-(4,6-diméthoxy-2-pyrimidinyl)-urée, chlorsulfuron, metsulfuron-méthyl, thifensulfuron-méthyl, triasulfuron, tribénuron-méthyl, orbencarbe, prosulfocarbe, triallate, cyanazine, terbutryne, flupoxam, $\alpha$,2-dichloro-5-[4-(difluorométhyl)-4,5-dihydro-3-méthyl-5-oxo-1H-1,2,4-triazole-1-yl]-4-fluorobenzènepropanoate d'éthyle, sulfentrazone, métosulam, flumetsulam, flupropacil, chlortoluron, isoproturon, linuron, métoxuron, néburon.